Europäisches Patentamt

European Patent Office

Office européen des brevets

(19)

(11) **EP 0 907 036 B1**

(12) **EUROPÄISCHE PATENTSCHRIFT**

(45) Veröffentlichungstag und Bekanntmachung des Hinweises auf die Patenterteilung:
**04.08.2004 Patentblatt 2004/32**

(51) Int Cl.⁷: **F16F 7/10**, F16F 15/00, B06B 1/02, H03H 9/15

(21) Anmeldenummer: **98115677.1**

(22) Anmeldetag: **20.08.1998**

(54) **Mechanischer Resonator mit variabler Resonanzfrequenz**

Mechanical resonator with variable resonance frequency

Résonateur méchanique avec fréquence de résonance variable

(84) Benannte Vertragsstaaten:
**DE FR GB IT SE**

(30) Priorität: **11.09.1997 DE 19739877**

(43) Veröffentlichungstag der Anmeldung:
**07.04.1999 Patentblatt 1999/14**

(73) Patentinhaber: **Eurocopter Deutschland GmbH**
**86609 Donauwörth (DE)**

(72) Erfinder:
• **Jänker, Peter, Dr.**
**85521 Riemerling (DE)**
• **Strehlow, Henning**
**81730 München (DE)**

(74) Vertreter: **Duschek, Horst Jürgen**
**EADS Deutschland GmbH**
**Patentabteilung**
**81663 München (DE)**

(56) Entgegenhaltungen:
**GB-A- 2 222 657        US-A- 3 614 677**
**US-A- 3 634 787        US-A- 4 626 730**
**US-A- 4 803 883**

**Beschreibung**

Die Erfindung betrifft einen mechanischen Resonator mit variabler Resonanzfrequenz, insbesondere für einen Schwingungsabsorber, welcher eine zumindest einseitig eingespannte Feder und eine träge Masse aufweist.

Die Resonanzfrequenz von mechanischen Resonatoren (Feder-Masse-Schwinger) wird im wesentlichen durch die Federsteifigkeit und die Größe der schwingenden trägen Masse bestimmt. Veränderungen dieser Resonanzfrequenz sind folglich durch Veränderungen dieser Parameter möglich, was sich technisch zwar einfach, beispielsweise durch Verschieben des Masseschwerpunktes oder durch Verlagerung der Einspannstelle der Feder, realisieren läßt, jedoch immer mit erheblichem Bauaufwand verbunden ist. Vor allem kann die Veränderung der Resonanzfrequenz und somit die Abstimmung des Resonators, z.B. auf einen schwingungsmäßig zu bedämpfenden Körper, nur relativ langsam erfolgen.

Die US-A-3614677 offenbart einen elektromechanischen Halbleiter-Resonator mit variabler Resonanzfrequenz, welcher eine einseitig eingespannte, aus einem Halbleitermaterial gebildete Feder, eine an der Feder angeordnete träge Masse, einen Weggeber bzw. Sensor zur Erfassung einer Auslenkung der Halbleiter-Feder und ihrer trägen Masse sowie eine elektronische Steuereinheit aufweist. Der Halbleiter-Resonator ist des Weiteren mit einem elektrothermischen Wandler ausgestattet, bei dem es sich z.B. um einen angesteuerten Transistor oder ein anderes, die Schwingung der Halbleiter-Feder anregendes, angesteuertes Erregerelement handelt, welches elektrische Energie in Wärme umwandelt und diese an die Halbleiter-Feder abgibt. Die Halbleiter-Feder wird somit infolge einer Temperaturänderung verbogen und zu einer Schwingung angeregt. An der Halbleiter-Feder sind Sensoren angeordnet, welche die durch die Temperaturänderung induzierte mechanische Schwingung in ein elektrisches Ausgangssignal mit einer der mechanischen Schwingung entsprechenden Frequenz umzuwandeln. Auf diese Weise wird ein frequenzselektives Halbleiterelement bereit gestellt.

Aus der US-A-4803883 ist ein Beschleunigungsmesser bekannt, der eine einseitig eingespannte Feder und eine träge Masse umfasst. Wirkt eine Beschleunigung auf den Beschleunigungsmesser so wird die Feder durch die auf die träge Masse einwirkenden Beschleunigungskräfte elastisch verformt, d.h. in einer primär durch die Anordnung und Ausbildung der Feder vorbestimmten Hauptrichtung gebogen, die nach Möglichkeit mit der Beschleunigungsrichtung übereinstimmen sollte. Um Ungenauigkeiten bei der Messung der Beschleunigung in der vorbestimmten Hauptrichtung zu vermeiden, die aus einer unerwünschte Verdrehung der Feder infolge einer nicht genau in der vorbestimmten Hauptrichtung verlaufenden Beschleunigungskomponente resultiert, ist an einem Einspannbereich der Feder eine Verdreheinrichtung vorgesehen, welche bei Auftreten einer solchen unerwünschten Verdrehung eine gegengerichtete Verdrehung der Feder bewirkt und auf diese Weise die mögliche Messungenauigkeit kompensiert. Bei der Verdreheinrichtung kann es sich z.B. um einen elektromechanischen Wandler in Form eines Piezoelementes handeln. Die Verdreheinrichtung wird mit Hilfe eines Sensors gesteuert, welcher die unerwünschte Verdrehung erfasst und über eine Servoeinrichtung aussteuert.

Aus der US-A-4626730 geht eine Schwingungsdämpfungseinrichtung für eine einseitig eingespannte Feder hervor, die mit einer träge Masse versehen ist. Die Schwingungsdämpfungseinrichtung umfasst einen an der Feder angebrachten Beschleunigungsgeber zur Erfassung einer Auslenkung und/oder Beschleunigung der Feder und/oder der trägen Masse sowie eine elektronische Steuereinheit. Die Feder ist des Weiteren mit einem elektromechanischen Wandler in Form eines Piezoelementes versehen, welches zum Zwecke der Dämpfung von Schwingungen der Feder Kräfte bzw. Spannungen in die Feder einleitet. Das Piezoelement wird hierbei derart mit geeigneter Phase, Amplitude und Frequenz angesteuert, dass es eine Dämpfung der Schwingung durch Erzeugung einer mechanischen Bewegung von korrekter Phase, Amplitude und Frequenz hervorruft. Mit anderen Worten wird in die Feder eine in Relation zu der zu dämpfenden Schwingung genau gegenphasige Schwingung eingeleitet. Die zu dämpfende Schwingung wird mit der gegenphasigen Schwingung überlagert und dadurch ein Dämpfungseffekt erzielt. Dieses Prinzip wird auch als destruktive Interferenz bezeichnet.

Es ist Aufgabe der vorliegenden Erfindung, einen mechanischen Resonator mit variabler Resonanzfrequenz zu schaffen, der mit erheblich kürzeren Reaktionszeiten und einfacher als bisher einstellbar ist.

Diese Aufgabe wird durch einen mechanischen Resonator mit den Merkmalen des Patentanspruchs 1 gelöst.

Die erfindungsgemäße Lösung nutzt die Möglichkeit, die Steifigkeit einer Feder virtuell zu verändern. Dazu sind z.B. in der Feder mechanisch aktive Elemente eingebaut, die durch elektrische Ansteuerung Kräfte bzw.Momente in die Feder einleiten. Über eine elektrische Ansteuerung kann nun die mechanische Wirkung der Feder nach außen beeinflußt werden. Die Abstimmung der mechanischen Resonanzfrequenz wird durch eine wegabhängige Ansteuerung des mechanisch aktiven Elementes bewirkt, wobei hierzu ein Weg- bzw. Beschleunigungsgeber vorgesehen ist, der die Auslenkung der Feder in ein wegabhängiges Signal umwandelt. Dieses Signal wird einer elektronischen Steuereinheit zugeführt, welche, ggf. phasenkorrigiert, den elektromechanischen Wandler so ansteuert, daß entweder eine der Auslenkung der Feder entgegengerichtete Kraft auf diese wirkt, was gleichwirkend mit einer Erhöhung der Federsteifigkeit ist, oder die auslenkenden Trägheitskraft unterstützt, was gleichwirkend mit einer Verringerung der Federsteifigkeit ist. Im letztgenannten Fall darf die unterstützende Kraft nicht größer als die elastomechanische Rückstellkraft sein.

Die Erfindung wird im folgenden anhand der in den Figuren teilweise schematisch dargestellten Ausführungsbeispiele näher beschrieben. Es zeigen:

Fig. 1　einen mechanischen Resonator mit piezoelektrischem Wandler und Weggeber,

Fig. 2　einen mechanischen Resonator mit einem Stapel aus Piezoelementen als elektromechanischen Wandler und

Fig. 3　einen mechanischen Resonator mit einseitiger Einspannung eines Biegebalkens in zwei Stapel aus Piezoelementen.

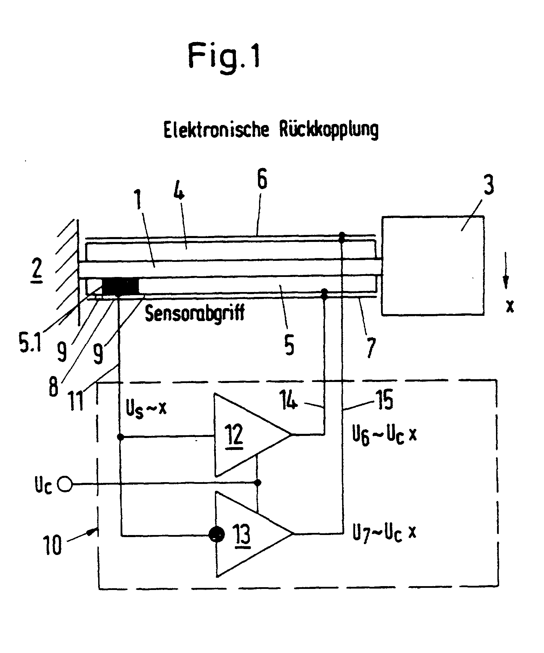

Bei dem in Figur 1 dargestellten Ausführungsbeispiel ist eine Blattfeder 1 aus Federstahl am linken Ende mit einer schwingungsmäßig zu bedämpfenden Struktur 2 starr verbunden. Die Blattfeder 1 trägt am rechten, freischwingenden Ende einen Massekörper 3; bei ausreichender Eigenmasse der Feder kann auf den zusätzlichen Massekörper verzichtet werden. Die Blattfeder 1 ist beidseitig mit piezoelektrischen Schichten 4 und 5 kraftschlüssig und elektrisch leitend verbunden. Die piezoelektrischen Schichten 4 und 5 sind jeweils in Dickenrichtung gepolt und auf der jeweiligen, der Blattfeder 1 gegenüberliegenden Seite mit je einer elastischen Kontaktierung 6 bzw. 7 versehen. Die Kontaktierung 7 ist in einem Teilbereich 8 durch Trennfugen 9 elektrisch isoliert und mit einer eigenen Leitung 11 versehen. In dem derart separierten Bereich 5.1 wird die piezoelektrische Schicht 5 als aktiver Weggeber verwendet, welcher aufgrund des piezoelektrischen Effektes bei einer Auslenkung x der Masse 3 und einer dadurch verursachten Verbiegung der Feder 1 ein wegabhängiges Spannungssignal $U_s$ liefert.

Das Spannungssignal $U_s$ wird einer Steuereinheit 10 zugeführt, dort um den Faktor $U_C$ in zwei Verstärkern 12 und 13 verstärkt und mit jeweils gegensinnigem Vorzeichen als Spannung $U_6$ bzw. $U_7$ über Leitungen 14 und 15 an die Kontakte 6 und 7 angelegt. Damit werden die beiden piezoelektrischen Schichten 4 und 5 je nach Auslenkungsrichtung der Masse 3 mit jeweils gegensinnigen Spannungen versehen, so daß sich die eine piezoelektrische Schicht dehnt, während sich die andere zusammenzieht. Die damit verursachte Biegekraft Fp ist so orientiert, daß sie z.B. der jeweiligen Auslenkung entgegen wirkt, wobei deren Größe sowohl von der Spannung $U_C$ als auch von der Auslenkung x abhängig ist. Die entsprechende Bewegungsgleichung für das o.g. System sieht dann wie folgt aus:

$$m\ddot{x} + k\dot{x} + Dx + F_p = 0.$$

Dabei bedeuten:

m =　Masse des Körpers 3
x =　Auslenkung des Körpers 3
D =　Federkonstante der Feder 1
k =　Dämpfung.

Die wegproportionalen Kräfte $F_p$ und Dx können zu einem Term $D_v(U_C)x$ zusammengefaßt werden, wobei $D_v$ die neue virtuelle Steifigkeit der Feder darstellt, die über die Steuergröße $U_C$ variiert werden kann.

Die Steuergröße $U_c$ kann auch so gewählt werden, daß $F_p$ negativ wird und somit in Richtung der Auslenkung wirkt. Dann wird $D_v(U_c)$ gegenüber D kleiner und die Resonanzfrequenz sinkt. Hierbei ist $U_c$ auf solche Werte begrenzt, bei denen $D_v(U_c)$ noch positiv ist.

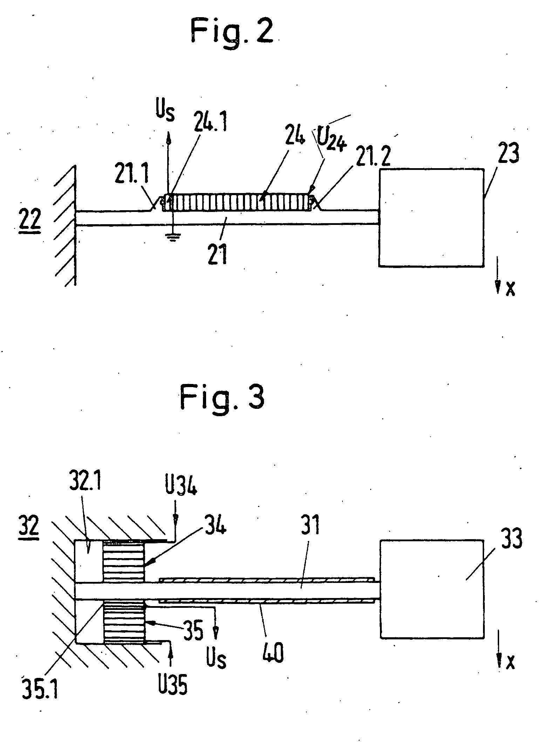

Bei dem in Figur 2 dargestellten Ausführungsbeispiel ist ein Biegebalken 21 aus Federstahl wie in Figur 1 mit einer zu bedämpfenden Struktur 22 einseitig kraftschlüssig verbunden, wobei das freie Ende des Balkens wiederum eine Masse 23 trägt. Der Biegebalken 21 weist zwei Lagerböcke 21.1 und 21.2 auf, zwischen denen ein Stapel aus Piezoelementen 24 eingespannt ist. Bei einer Auslenkung x der Masse 23 führt die Verbiegung des Balkens 21 zu Druck- bzw. Zugkräften auf den Stapel 24. Somit kann ein Segment des Stapels zur Erzeugung eines wegabhängigen Signals Us verwendet werden; der Rest wird als elektromechanischer Wandler analog zu Figur 1 verwendet und über eine, durch Verstärkung der Spannung $U_s$ erzeugte Steuerspannung $U_{24}$ angesteuert.

Bei dem in Figur 3 dargestellten Ausführungsbeispiel ist ein Biegebalken 31 in der Nähe des mit einer zu bedämpfenden Struktur 32 befestigten Endes zwischen zwei Stapeln 34 und 35 aus piezoelektrischen Elementen eingespannt, welche in einer Ausnehmung 32.1 der Struktur 32 gelagert sind. Ein Segment 35.1 des piezoelektrischen Stapels 35 ist analog zu Figur 2 elektrisch isoliert und wird als Weggeber zur Erzeugung einer von der Auslenkung x der Masse 33 abhängigen Spannung $U_s$ verwendet. Die Steuerspannungen $U_{34}$ und $U_{35}$ werden wie im Ausführungsbeispiel gemäß Figur 1 erzeugt und den Stapeln 34 bzw. 35 zugeführt.

Zur Erhöhung der Dämpfung des Resonators kann wie in Fig. 3 angedeutet, die Feder mit einer Dämpfungsmasse 40 beschichtet sein.

**Bezugszeichenliste**

1　Blattfeder
2　Zu bedämpfende Struktur
3　Massekörper

4      Piezoelektrische Schicht
5      Piezoelektrische Schicht
5.1     Separierter Bereich
6      Elastische Kontaktierung
7      Elastische Kontaktierung
8      Teilbereich von 7
9      Trennfugen

10     Steuereinheit
11     Leitung
12     Verstärker
13     Verstärker
14     Leitung
15     Leitung

21     Biegebalken
21.1    Lagerbock
21.2    Lagerbock
22     Zu bedämpfende Struktur
23     Masse
24     Piezoelementstapel
24.1    Stapel

31     Biegebalken
32     Zu bedämpfende Struktur
32.1    Ausnehmung
33     Masse
34     Piezoelementstapel
35     Piezoelementstapel
35.1    Segment

40     Dämpfungsmasse

$U_C$     Faktor / Steuergröße
$U_S$     Steuerspannung
$U_{24}$    Steuerspannung
$U_{34}$    Steuerspannung
$U_{35}$    Steuerspannung
$U_6$     Spannung
$U_7$     Spannung
x      Auslenkung

**Patentansprüche**

1. Mechanischer Resonator mit variabler Resonanzfrequenz, insbesondere für einen Schwingungsabsorber, welcher eine zumindest einseitig eingespannte Feder (1; 21; 31), eine träge Masse (2; 23; 33), einen Weg- und/oder Beschleunigungsgeber (5.1; 24.1; 35.1) zur Erfassung einer Auslenkung (x) und/oder Beschleunigung der Feder (1; 21; 31) und/oder der trägen Masse (2; 23; 33) sowie eine elektronische Steuereinheit (10) aufweist, wobei die Feder (1; 21; 31) und wahlweise zusätzlich die träge Masse (2; 23; 33) mit einem elektromechanischen Wandler (4, 5; 24; 34, 35) versehen ist, welcher Kräfte in die Feder (1; 21; 31) einleitet und die Steifigkeit der Feder (1; 21; 31) und dadurch die Resonanzfrequenz des Systems aus Feder (1; 21; 31) und träger Masse (2; 23; 33) verändert, wobei die Krafteinleitung durch den elektromechanischen Wandler (4, 5; 24; 34, 35) mittels des Weg- und/oder Beschleunigungsgebers und der elektronischen Steuereinheit (10) kontinuierlich steuerbar ist.

2. Mechanischer Resonator nach Anspruch 1, **dadurch gekennzeichnet, dass** der Weg geber (5.1) die Auslenkung (x) der Feder (1; 21; 31) und/oder der trägen Masse (2; 23; 33) erfasst und ein entsprechendes wegabhängiges Spannungssignal ($U_s$) erzeugt.

3. Mechanischer Resonator nach Anspruch 2, **dadurch gekennzeichnet, dass** die elektronische Steuereinheit (10) abhängig vom wegabhängigen Spannungssignal ($U_s$) Steuerspannungen ($U_6$, $U_7$; $U_{24}$; $U_{34}$, $U_{35}$) zur Ansteuerung des elektromechanischen Wandlers (4, 5; 24; 34, 35) erzeugt.

4. Mechanischer Resonator nach einem der Ansprüche 1 - 3, **dadurch gekennzeichnet, dass** die Feder eine Blattfeder (1) ist, die zumindest einseitig mit einer piezoelektrischen Schicht (4, 5) kraftschlüssig verbunden ist, wobei an der piezoelektrischen Schicht (4, 5) eine mit der Auslenkung (x) der Blattfeder (1) ansteigende Spannung ($U_6$, $U_7$) anliegt, welche der auslenkenden Trägheitskraft entgegenwirkt oder diese verstärkt.

5. Mechanischer Resonator nach einem der Ansprüche 1 - 3, **dadurch gekennzeichnet, dass** die Feder ein elastischer Biegebalken (21) mit zwei, in Längsrichtung des Biegebalkens (21) beabstandeten Lagerböcken (21.1, 21.2) ist, zwischen denen ein Stapel (24) aus Piezoelementen angeordnet ist, wobei an dem Stapel (24) eine der Auslenkung (x) des Biegebalkens (21) proportionale elektrische Spannung ($U_{24}$) anliegt, welche der auslenkenden Trägheitskraft entgegenwirkt oder diese verstärkt.

6. Mechanischer Resonator nach einem der Ansprüche 1 - 3, **dadurch gekennzeichnet, dass** die Feder ein elastischer Biegebalken (31) ist, der in der Nähe der eingespannten Seite zusätzlich zwischen zwei Stapeln (34, 35) aus Piezoelementen eingespannt ist, wobei an den Stapeln (34, 35) jeweils eine der Auslenkung (x) des Biegebalkens (31) proportionale, elektrische Spannung ($U_{34}$, $U_{35}$) anliegt, welche der auslenkenden Trägheitskraft entgegenwirkt oder diese verstärkt.

**7.** Mechanischer Resonator nach einem der Ansprüche 4 bis 6,
**dadurch gekennzeichnet, dass**
ein Teilbereich (5.1; 24.1; 35.1) der piezoelektrischen Schicht (5; 24, 35) bzw. des Stapels (24.1; 35.1) aus Piezoelementen von der restlichen Schicht bzw. dem restlichen Stapel elektrisch isoliert und als Weg- und/oder Beschleunigungsgeber (5.1; 24.1; 35.1) mit der Steuereinheit (10) elektrisch verbunden ist.

**8.** Mechanischer Resonator nach einem der Ansprüche 4 bis 7,
**dadurch gekennzeichnet, dass**
die piezoelektrische Schicht (4, 5) eine elastische Kontaktierung (6, 7) aufweist.

**9.** Mechanischer Resonator nach einem der Ansprüche 4 bis 8,
**dadurch gekennzeichnet, dass**
die Feder (1, 21, 31) am jeweils freien Ende einen Massekörper (3; 23; 33) aufweist.

**10.** Mechanischer Resonator nach einem der vorangegangenen Ansprüche,
**dadurch gekennzeichnet, dass**
die Feder (1; 21; 31) mit einer Dämpfungsmasse (40) versehen ist.

## Claims

**1.** Mechanical resonator having a variable resonant frequency, particularly for a vibration absorber, the said mechanical resonator comprising a spring (1; 21; 31) which is fixed at at least one end, an inert mass (2; 23; 33), a displacement and/or acceleration transducer (5.1; 24.1; 35.1) for measuring a deflection (x) and/or acceleration of the spring (1; 21; 31) and/or of the inert mass (2; 23; 33), and comprising an electronic control unit (10), the spring (1; 21; 31) and, optionally, in addition, the inert mass (2; 23; 33) being provided with an electromechanical converter (4, 5; 24; 34, 35) which introduces forces into the spring (1; 21; 31) and alters the stiffness of the spring (1; 21; 31) and, thereby, the resonant frequency of the system consisting of the spring (1; 21; 31) and inert mass (2; 23; 33), the introduction of force by the electromechanical converter (4, 5; 24; 34, 35) being continuously controllable by means of the displacement and/or acceleration transducer and the electronic control unit (10).

**2.** Mechanical resonator according to Claim 1,
**characterized in that**
the displacement transducer (5.1) measures the deflection (x) of the spring (1; 21; 31) and/or of the inert mass (2; 23; 33) and generates a corresponding displacement-dependent voltage signal ($U_s$).

**3.** Mechanical resonator according to Claim 2,
**characterized in that**
in dependence on the displacement-dependent voltage signal ($U_s$), the electronic control unit (10) generates control voltages ($U_6$, $U_7$; $U_{24}$; $U_{34}$, $U_{35}$) for driving the electromechanical converter (4, 5; 24; 34, 35).

**4.** Mechanical resonator according to any one of Claims 1 to 3,
**characterized in that**
the spring is a leaf spring (1) which is frictionally connected at at least one end to a piezoelectric layer (4, 5), there being present at the piezoelectric layer (4, 5) a voltage ($U_6$, $U_7$) which rises with the deflection (x) of the leaf spring (1) and counters or increases the deflecting inertial force.

**5.** Mechanical resonator according to any one of Claims 1 to 3,
**characterized in that**
the spring is a flexible bending bar (21) having two bearing blocks (21.1, 21.2) which are separated by a distance in the longitudinal direction of the bending bar (21) and between which is disposed a stack (24) of piezoelements, there being present at the stack (24) a voltage ($U_{24}$) which is proportional to the deflection (x) of the bending bar (21) and counters or increases the deflecting inertial force.

**6.** Mechanical resonator according to any one of Claims 1 to 3,
**characterized in that**
the spring is a flexible bending bar (31) which, in the vicinity of the fixed end, is additionally fixed between two stacks (34, 35) of piezoelements, there being respectively present at the stacks (34, 35) a voltage ($U_{34}$, $U_{35}$) which is proportional to the deflection (x) of the bending bar (31) and counters or increases the deflecting inertial force.

**7.** Mechanical resonator according to any one of Claims 4 to 6,
**characterized in that**
a partial region (5.1; 24.1; 35.1) of the piezoelectric layer (5; 24, 35) or of the stack (24.1; 35.1) of piezoelectric elements is electrically isolated from the remainder of the layer or the remainder of the stack, respectively, and is electrically connected, as a displacement and/or acceleration transducer (5.1; 24.1; 35.1), to the control unit (10).

**8.** Mechanical resonator according to any one of Claims 4 to 7,

**characterized in that**

the piezoelectric layer (4, 5) comprises a flexible contacting (6, 7).

9. Mechanical resonator according to any one of Claims 4 to 8,
   **characterized in that**
   at its respectively free end, the spring (1, 21, 31) comprises a mass body (3; 23; 33).

10. Mechanical resonator according to any one of the preceding Claims,
    **characterized in that**
    the spring (1; 21; 31) is provided with a damping mass (40).

## Revendications

1. Résonateur mécanique à fréquence de résonance variable, en particulier pour un amortisseur d'oscillations, qui présente un ressort (1 ; 21 ; 31) fixé au moins d'un côté, une masse inerte (2 ; 23 ; 33), un détecteur de trajectoire ou d'accélération (5.1 ; 24.1 ; 35.1) pour acquérir une déviation (x) et/ou une accélération du ressort (1 ; 21 ; 31) et/ou de la masse inerte (2 ; 23 ; 33) ainsi qu'une unité de commande électronique (10),
   dans lequel
   le ressort (1 ; 21 ; 31) et, au choix, en plus, la masse inerte (2 ; 23 ; 33), sont pourvus d'un convertisseur électromécanique (4, 5 ; 24 ; 34, 35) qui induit des forces dans le ressort (1 ; 21 ; 31) et modifie la rigidité du ressort (1 ; 21 ; 31) et ainsi la fréquence de résonance du système constitué du ressort (1 ; 21 ; 31) et de la masse inerte (2 ; 23 ; 33), l'induction de force pouvant être commandée en permanence par le convertisseur électromécanique (4, 5 ; 24 ; 34, 35) au moyen du détecteur de trajectoire ou d'accélération et de l'unité de commande électronique (10).

2. Résonateur mécanique selon la revendication 1,
   **caractérisé en ce que**
   le détecteur de trajectoire (5.1) acquiert la déviation (x) du ressort (1 ; 21 ; 31) et/ou de la masse inerte (2 ; 23 ; 33) et crée un signal de tension ($U_s$) dépendant, en accord, de la trajectoire.

3. Résonateur mécanique selon la revendication 2,
   **caractérisé en ce que**
   l'unité de commande électronique (10) crée, pour la commande du convertisseur électromécanique (4, 5 ; 24 ; 34, 35), des tensions de commande ($U_6$, $U_7$ ; $U_{24}$ ; $U_{34}$ ; $U_{35}$) dépendantes du signal de tension ($U_s$) qui dépend de la trajectoire.

4. Résonateur mécanique selon l'une quelconque des revendications 1 à 3,
   **caractérisé en ce que**
   le ressort est un ressort à lame (1) qui est relié en adaptation de force au moins d'un côté à une couche piézo-électrique (4, 5), une tension ($U_6$, $U_7$) augmentant avec la déviation du ressort à lame (1) se trouvant sur la couche piézo-électrique (4, 5), qui contrarie ou renforce la force d'inertie de déviation.

5. Résonateur mécanique selon l'une quelconque des revendications 1 à 3,
   **caractérisé en ce que**
   le ressort est une barre de flexion (21) élastique avec deux butées (21.1, 21.2) à distance dans le sens longitudinal de la barre de flexion (21), entre lesquelles est disposée une pile (24) d'éléments piézo-électriques, une tension ($U_{24}$) proportionnelle à la déviation (x) de la barre de flexion (21) se trouvant sur la couche (24), qui contrarie ou renforce la force d'inertie de déviation.

6. Résonateur mécanique selon l'une quelconque des revendications 1 à 3,
   **caractérisé en ce que**
   le ressort est une barre de flexion (31) élastique qui est fixée à proximité du côté fixé en outre entre deux piles (34, 35), une tension ($U_{34}$, $U_{35}$) proportionnelle la déviation (x) de la barre de flexion (31) se trouvant chaque fois sur les couches (34, 35), qui contrarie ou renforce la force d'inertie de déviation.

7. Résonateur mécanique selon l'une quelconque des revendications 4 à 6,
   **caractérisé en ce qu'**
   une zone partielle (5.1 ; 24.1 ; 35.1) de la couche piézo-électrique (5 ; 24 ; 35) ou de la pile (24.1 ; 35.1) d'éléments piézo-électriques est isolée électriquement de la couche restante ou de la pile restante et est reliée électriquement à l'unité de commande électronique (10) en tant que détecteur de trajectoire et/ou d'accélération (5.1 ; 24.1 ; 35.1).

8. Résonateur mécanique selon l'une quelconque des revendications 4 à 7,
   **caractérisé en ce que**
   la pile piézo-électrique (4, 5) présente une mise en contact élastique (6, 7).

9. Résonateur mécanique selon l'une quelconque des revendications 4 à 8,
   **caractérisé en ce que**
   le ressort (1 ; 21 ; 31) présente en l'extrémité libre du moment un corps de masse (3 ; 23 ; 33).

10. Résonateur mécanique selon l'une quelconque des revendications précédentes,
    **caractérisé en ce que**
    le ressort (1 ; 21 ; 31) est pourvu d'une masse

**EP 0 907 036 B1**

d'amortissement (40).

# Fig.1

Elektronische Rückkopplung

# Fig. 2

# Fig. 3